# EUROPÄISCHE PATENTSCHRIFT

(11) **EP 3 542 056 B1**
(45) Veröffentlichungstag und Bekanntmachung des Hinweises auf die Patenterteilung: **20.04.2022**
(21) Anmeldenummer: 17807754.1
(22) Anmeldetag: 15.11.2017
(51) Int. Cl.: F03D 7/04, F03D 7/02, F03D 17/00

(54) **VERFAHREN ZUR STEUERUNG EINER WINDENERGIEANLAGE UND ZUGEHÖRIGE WINDENERGIEANLAGE**
METHOD FOR CONTROLLING A WIND TURBINE, AND ASSOCIATED WIND TURBINE
PROCÉDÉ POUR COMMANDER UNE ÉOLIENNE ET ÉOLIENNE CORRESPONDANTE

(30) Priorität: 15.11.2016 DE 102016121961
(43) Veröffentlichungstag der Anmeldung: 25.09.2019
(73) Patentinhaber: Wobben Properties GmbH, 26607 Aurich (DE)
(72) Erfinder: DE BOER, Wolfgang, 26802 Moormerland (DE)
(74) Vertreter: Eisenführ Speiser
(86) Internationale Anmeldenummer: PCT/EP2017/079300
(87) Internationale Veröffentlichungsnummer: WO 2018/091519

(56) Entgegenhaltungen:
- EP-A1- 2 154 362
- EP-A1- 2 375 060
- DE-A1-102009 015 167
- JUSTIN CREABY: "Method to Automatically Tune a Yaw Offset for a Wind Turbine Direction Sensor on a Wind Turbine via Extremum Seeking", PRIOR ART PUBLISHING, 21. Mai 2014 (2014-05-21), XP040633636, ISBN: 978-3-942905-88-6

## Beschreibung

Die vorliegende Erfindung betrifft ein Verfahren zum Steuern einer Windenergieanlage und eine Windenergieanlage mit einem Steuerungsmodul sowie einen Windpark.

Es ist bekannt, Windenergieanlagen basierend auf Anemometern oder ähnlichen Vorrichtungen, die zur Bestimmung einer Windgeschwindigkeit und einer Anströmrichtung im Bereich einer Gondel der Windenergieanlage bereitgestellt sind, zu steuern. Die Windenergieanlage, insbesondere eine Azimutposition der Windenergieanlage, wird derart gesteuert, dass eine Anströmrichtung der Winderfassungsvorrichtung einem für die vorherrschende Windgeschwindigkeit zugehörigen Wert entspricht. Das Ziel der Regelung ist es, die bestmögliche Ausrichtung der Windenergieanlage ausgehend von der erfassten Anströmrichtung zu erhalten, wobei die gemessene Anströmrichtung um einen, insbesondere von der Windgeschwindigkeit abhängigen, Korrekturterm korrigiert wird.

Eine derartige Windrichtungskorrekturtabelle wurde bislang an einem Prototypen einer Windenergieanlage mit einem daneben angeordneten Windmessmast bestimmt und dann auf den Rest der Serie der Windenergieanlagen übertragen. Beide Anlagen werden frei angeströmt, die Windrichtungskorrekturtabelle wird dann derart bestimmt, dass die Windenergieanlage gerade im Wind steht.

Bei der Windenergieanlage im Windpark treten Montageungenauigkeiten insbesondere bei der Montage der Windmessvorrichtung auf, die beispielsweise um mehrere Grad schief auf der Gondel montiert sein kann. Diese Fehleinstellung der Windmessvorrichtung überträgt sich direkt auf die Steuerung zur Windrichtungsnachführung und muss somit individuell für jede Anlage bestimmt werden und entsprechende Korrekturwerte manuell erfasst und eingepflegt werden.

Daneben gibt es ferner, insbesondere durch die Ausgestaltung der Rotorblätter mit beispielsweise Hinterkantensegmenten, einen Unterschied der Anströmrichtung zwischen Gondel und Anemometer, der ebenfalls zu korrigieren ist.

Durch die manuelle Bestimmung der Fehler der Windrichtungskorrekturtabellen je Anlage entsteht ein hoher Aufwand bei Montage und Wartung sowie eine nicht geringe Anfälligkeit für Fehlbestimmungen.

EP 2 375 060 A1 offenbart ein Verfahren zur Giersteuerung einer Windenergieanlage. Die Giersteuerung wird so durchgeführt, dass die Gondel in eine tatsächliche Hauptwindrichtung zeigt. Die tatsächliche Windrichtung wird geschätzt, indem die Hauptwindrichtung mit einem Anemoskop erfasst wird, wobei die tatsächliche Windrichtung durch Annahme eines Windrichtungsversatzwertes, der eine Abweichung zwischen der Hauptwindrichtung und der tatsächlichen Windrichtung ist, angenommen wird. Eine durchschnittliche Generatorausgangsleistung wird für eine vorbestimmte Zeitspanne in der angenommenen tatsächlichen Windrichtung mit einer Einheit zur Berechnung der durchschnittlichen Generatorausgangsleistung berechnet und bezüglich des angenommenen Windrichtungsversatzwertes an eine quadratische Kurve angenähert. Der Windrichtungsversatzwert wird zu dem Zeitpunkt, zu dem die durchschnittliche Generatorausgangsleistung das Maximum in der angenäherten quadratischen Kurve ist, als tatsächlichen Versatzwert abgeschätzt.

Der Artikel "Method to Automatically Tune a Yaw Offset for a Wind Turbine Direction Sensor on a Wind Turbine via Extremum Seeking", ISBN 978-3-942905-88-6, offenbart ein Verfahren zur Korrektur einer Giersteuerung einer Gondel einer Windenergieanlage, das auf einer Extremwertsuche basiert.

EP 2 154 362 A1 beschreibt eine Windenergieanlage, ein Windenergieanlagensystem und ein Energieerzeugungssteuerverfahren einer Windenergieanlage, die in der Lage sind, die Energieerzeugungsfähigkeit zu verbessern und die Ermüdungsbelastung der Windenergieanlage zu verringern. Eine Datenakkumulationseinheit akkumuliert sequentiell Datensätze einer erzeugten Ausgangsleistung P während des Betriebs der Windenergieanlage, einer ankommenden Windgeschwindigkeit Ws, die auf der Grundlage einer am Windmesser gemessenen Windgeschwindigkeit geschätzt wird, und einer Windrichtungsabweichung, die die Differenz zwischen einer am Anemometer gemessenen Windrichtung w und der Orientierung der Gondel ist. Die statistische Auswertung der gesammelten Daten erfolgt durch eine Auswerteeinheit. Eine Verteilungskurve, die der Windrichtungsabweichung der erzeugten Ausgangsleistung bei jeder ankommenden Windgeschwindigkeit entspricht, wird bestimmt. Die Windrichtungsabweichung, die der Spitze der Verteilungskurve entspricht, wird als ein Korrekturwert des Anemometers eingestellt. Der Korrekturwert des Anemometers für jede ankommende Windgeschwindigkeit wird in einer Windrichtungskorrekturtabelle gespeichert. Die am Anemoskop gemessene Windrichtung Vw wird mit dem Korrekturwert des Anemometers für jede ankommende Windgeschwindigkeit Ws korrigiert. Die Stromerzeugungssteuerung wird unter Verwendung der korrigierten Windrichtung als Steuerparameter ausgeführt.

DE 10 2009 015 167 A1 offenbart ein Verfahren zum Nachführen einer Rotorebene einer Windenergieanlage gegen die Windrichtung, bei dem folgende Schritte fortlaufend wiederholt werden: die Windstärke und eine mechanische oder elektrische, auf die Windstärke normierte Abgabeleistung der Windenergieanlage werden bestimmt, ausschließlich beim Anfahren der Windenergieanlage wird die Rotorebene in einer Azimutalrichtung leicht verstellt, eine allein auf der Änderung der Azimutalrichtung beruhende, normierte Leistungsdifferenz wird bestimmt, aus der normierten Leistungsdifferenz und der zuletzt angewendeten Verstellrichtung wird ein Korrekturwert bestimmt, die Rotorebene wird entsprechend dem Betrag des Korrekturwerts in einer Verstellrichtung in Azimutalrichtung verstellt, wenn der Betrag einen Schwellwert übersteigt, wobei die Verstellrichtung mit der letzten Verstellrichtung übereinstimmt, wenn die normierte Leistungsdifferenz positiv ist, und ansonsten entgegengesetzt dazu ist.

Vor diesem Hintergrund war es eine Aufgabe der vorliegenden Erfindung, ein Verfahren zum Steuern einer Windenergieanlage sowie eine zugehörige Windenergieanlage bereitzustellen, die eine verbesserte Windnachführung ermöglichen.

Erfindungsgemäß wird ein Verfahren zum Steuern einer Windenergieanlage bereitgestellt. Das Verfahren umfasst ein Bereitstellen einer Windgeschwindigkeit und einer Anströmrichtung, die von einer Windmessvorrichtung der Windenergieanlage bestimmt werden, ein Bereitstellen eines Korrekturwertes der Anströmrichtung in Abhängigkeit der Windgeschwindigkeit und ein Durchführen eines Lernverfahrens des Korrekturwertes der Anströmrichtung in Abhängigkeit der Windgeschwindigkeit. Das Lernverfahren umfasst mehrere Optimierungsschritte, wobei eine Ausführung der Optimierungsschritte von den bereits für die bereitgestellte Windgeschwindigkeit durchgeführten Optimierungsschritten abhängt. Die Zeitdauer zwischen zwei für eine Windgeschwindigkeit durchgeführten Optimierungsschritten nimmt mit der Anzahl ausgeführter Optimierungsschritte zu.

Der Korrekturwert der Anströmrichtung bzw. die um den Korrekturwert korrigierte Anströmrichtung wird vorzugsweise für eine Azimutbewegung und -regelung eines Turms der Windenergieanlage benutzt. Durch den Korrekturwert der Anströmrichtung wird gewährleistet, dass, in Abhängigkeit der Windgeschwindigkeit, die Windenergieanlage jederzeit optimal im Wind steht. Bei der praktischen Implementierung der Regelung sind natürlich die weiteren Randbedingungen, wie beispielsweise ein Verschleiß der Azimutnachführung, zu berücksichtigen.

Das erfindungsgemäße Verfahren ist somit geeignet, die Windrichtungskorrekturtabellen der individuellen Windenergieanlage Stück für Stück mittels des Lernverfahrens zu lernen, ohne dass eine manuelle Bestimmung von Korrekturwerten erforderlich ist. Nachdem das Lernverfahren bzw. die Ausführung der Optimierungsschritte von den bereits für die bereitgestellte Windgeschwindigkeit durchgeführten Optimierungsschritten abhängt, wird ferner ermöglicht, dass das Verfahren einen anfänglichen Korrekturwert bestimmt und nach einer feststellbaren Lernphase, während derer sich der bzw. die Korrekturwerte der Windenergieanlage einpendelt, zum dauerhaften Betrieb der Windenergieanlage geeignet ist.

In einer Ausführungsform würde der Korrekturwert für einen bestimmten Arbeitspunkt der Windenergieanlage bestimmt. In einer Ausführungsform wird der Korrekturwert der Anströmrichtung somit in Abhängigkeit eines Arbeitspunktes der Windenergieanlage bereitgestellt. Für einen bestimmten Arbeitspunkt kann dann festgestellt werden, wie viele Optimierungsschritte des Lernverfahrens bereits durchgeführt wurden. In Abhängigkeit davon, wie viele Optimierungsschritte für den bestimmten Arbeitspunkt bereits durchgeführt wurden, erfolgt dann eine Ausführung weiterer Optimierungsschritte.

Die Zeitdauer zwischen zwei für eine Windgeschwindigkeit durchgeführten Optimierungsschritten nimmt mit der Anzahl ausgeführter Optimierungsschritte zu. Zu Beginn des Lernverfahrens liegen für eine Windgeschwindigkeit bzw. vorzugsweise für einen bestimmten Arbeitspunkt keine oder nur sehr wenige Daten vor. Je mehr Daten vorliegen, desto genauer ist der Korrekturwert für eine bestimmte Windgeschwindigkeit bzw. einen bestimmten Arbeitspunkt. Entsprechend ist es ausreichend, die Frequenz der ausgeführten Optimierungsschritte mit einer Anzahl der bereits ausgeführten Optimierungsschritte abnehmend auszugestalten. Jeder Optimierungsschritt umfasst vorzugsweise eine Azimutverstellung der Windenergieanlage, die mit einem Leistungsabfall einhergeht. Auch ist es, wie bereits erwähnt, wünschenswert, die Frequenz der Azimutverstellung auf einem vertretbaren Maß zu halten. Beispielsweise kann während einer Einlaufphase das Durchführen der Optimierungsschritte alle wenige Minuten erfolgen. Ist die Anlage eingelaufen, so kann die Frequenz beispielsweise auf ein stündliches Durchführen verringert werden. Ein stündliches Durchführen der Optimierungsschritte ist im Rahmen der Ausführung der sowieso durchgeführten Windnachführung unauffällig und kann ohne erhöhten Verschleiß während der gesamten Lebensdauer der Windenergieanlage durchgeführt werden. Indem lediglich die Frequenz reduziert wird, ohne das Verfahren insgesamt zu beenden, kann auch eine zu einem späteren Zeitpunkt eintretende Veränderung berücksichtigt werden und die Windenergieanlage immer mit der optimalen Korrektur der Windnachführung betrieben werden.

In einer Ausführungsform korrigiert der Korrekturwert die gemessene Anströmrichtung zur Regelung der Azimutposition der Windenergieanlage.

In einer Ausführungsform umfasst jeder Optimierungsschritt ein Variieren des Azimutwinkels in zunächst die eine und dann die andere Richtung. Eine Variation des Azimutwinkels entspricht vorzugsweise einer Drehung der Gondel beispielsweise nach links und rechts. In einer Ausführungsform wird die Windenergieanlage beispielsweise zunächst um 5° nach links und dann um 5° nach rechts korrigiert. Selbstverständlich ist die Variation zunächst nach links und dann nach rechts sowie auch die beispielhaft angeführten 5° als bevorzugte Ausführung zu verstehen, wobei der Fachmann auch andere Reihenfolgen und Größen der Variation berücksichtigt.

Vorzugsweise wird sowohl nach Variation in der einen Richtung als auch nach Variation in der anderen Richtung ein Optimierungsparameter verglichen und ein Vorschlag für die Änderung des Korrekturwertes so lange bereitgestellt, bis die Veränderung des Optimierungsparameters symmetrisch mit der Variation ist. In einer Ausführungsform ist der Optimierungsparameter ein Leistungseinbruch, sodass ein Vergleich der Veränderung der Leistung bei einer Variation in die eine Richtung und die andere Richtung erfolgt. In einer anderen Ausführungsform, insbesondere wenn die Windenergieanlage mit Nennleistung betrieben wird, wird eine Variation des Korrekturwertes keinen Leistungseinbruch nach sich ziehen. In dieser Ausführungsform kann der Korrekturwinkel, der dichter am Optimum ist, der Wert sein, bei dem die Anlage noch mit einem höheren Blattwinkel die Nennleistung erzeugen kann.

In einer Ausführungsform weist jeder Optimierungsschritt weiter auf: Bestimmen des jeweiligen Leistungsabfalls der Windenergieanlage nach dem Variieren des Azimutwinkels in die eine Richtung und die andere Richtung, Auswerten beider Leistungsabfälle und Bestimmen der Richtung des Variierens mit geringerem Leistungsabfall. Optional weist jeder Optimierungsschritt weiter ein Bereitstellen einer Änderung des Korrekturwertes in der Richtung des geringeren Leistungsabfalls auf. Änderungen der Leistung, d.h. Leistungsgradienten, sind in Richtung eines Optimums flacher, d.h. Leistungsverluste sind weniger stark. Am Optimum sind die Gradienten für Drehungen in die eine Richtung und die andere Richtung gleich stark, d.h. eine dann wiederkehrende Ausführung des Optimierungsschrittes hat kein Bereitstellen eines geänderten Korrekturwertes mehr zu Folge.

In einer Ausführungsform weist jeder Optimierungsschritt dann, wenn die Windenergieanlage Nennleistung erzeugt und kein Leistungsabfall bei dem Variieren des Azimutwinkels in die eine Richtung und die andere Richtung auftritt, weiter auf: Erhöhen eines Blattwinkels der Rotorblätter, Feststellen eines maximalen Blattwinkels, für den die Windenergieanlage Nennleistung erzeugen kann, und optional Bereitstellen einer Änderung des Korrekturwertes in der Richtung, für die die Windenergieanlage mit höherem Blattwinkel die Nennleistung erzeugen kann. Anders ausgedrückt kann über die Bestimmung des maximalen Blattwinkels, mit dem die Nennleistung erreichbar ist, die Windnachführung auch bei Nennleistung optimiert werden.

In einer Ausführungsform wird ein Optimierungsschritt des Lernverfahrens nur dann durchgeführt, wenn ein Turbulenzkriterium einen Schwellwert unterschreitet. Durch das Turbulenzkriterium kann sichergestellt werden, dass eine durch den Optimierungsschritt eventuell festgestellte Verbesserung nicht auf eine Änderung der aktuell vorherrschenden Windverhältnisse, sondern durch die Verbesserung des Korrekturwertes erzielt wird. Hierfür eignet sich böiger oder turbulenter Wind nicht.

In einer Ausführungsform umfasst das Turbulenzkriterium einen Unterschied zwischen einem Momentanwert und einem Einminuten-Mittelwert der Leistung. Andere Ausführungsformen des Toleranzkriteriums sind für den Fachmann einfach umsetzbar, beispielsweise kann das Turbulenzkriterium einen Unterschied zwischen einem Minuten-Mittelwert und einem Zehnminuten-Mittelwert der Leistung und/oder der Windgeschwindigkeit umfassen. Wenn sich die Leistung und/oder die Windgeschwindigkeit der letzten Minute und der letzen zehn Minuten nicht signifikant unterscheiden, kann von einem wenig böigen Wind ausgegangen werden. In einer anderen In einer Ausführungsform wird ein Optimierungsschritt des Lernverfahrens nur dann durchgeführt, wenn eine Schwankung der Windrichtung einen Schwellwert unterschreitet. Dadurch wird sichergestellt, dass das Lernverfahren nur dann Anwendung findet, wenn die Windrichtung gerade nicht häufig schwankt, die Anlage also nicht viele Windnachführungen durchführt bzw. sogar eine Schräganströmung feststellt.

In einer Ausführungsform wird die Windgeschwindigkeit vor dem Beginn oder nach dem Abschluss eines Optimierungsschrittes bestimmt. Eine Windgeschwindigkeitsmessung kann insbesondere durch eine Schräganströmung der Windenergieanlage beeinflusst werden. Während eines Optimierungsschrittes kommt es zu kurzzeitiger Schräganströmung, die die bestimmte Windgeschwindigkeit während des Optimierungsschrittes asymmetrisch verfälscht. Indem die Windgeschwindigkeit vor dem Beginn oder nach dem Abschluss bestimmt wird, wird verhindert, dass sich beispielsweise eine Asymmetrie in den Kennfeldern der Korrekturwerte ergibt, die eine Drehrichtung beispielsweise um die Azimutposition bevorzugen würde.

In einer Ausführungsform umfasst das Verfahren weiter ein Bereitstellen einer Gondelposition, wobei der Korrekturwert in Abhängigkeit der Gondelposition bereitgestellt und das Lernverfahren in Abhängigkeit der Gondelposition durchgeführt wird. Durch Bereitstellung der Gondelposition zusätzlich zur Anströmrichtung kann der Korrekturwert Parkeffekte, beispielsweise Nachlaufeffekte, berücksichtigen. Durch das erfindungsgemäße Verfahren kann somit auch eine Optimierung der verschiedenen Anlagen innerhalb eines Parks für verschiedene Windrichtungen ohne manuellen Aufwand erreicht werden. Die Gondelposition ist anders ausgedrückt für die Himmelsrichtung des Windes indikativ.

In einer Ausführungsform wird der Korrekturwert basierend auf einem Kennfeld bereitgestellt. Die Verwendung von Kennfeldern ist weit verbreitet. Verschiedene Dimensionalitäten von Kennfeldern können für das erfindungsgemäße Verfahren zum Einsatz kommen. Die hierin erwähnten, insbesondere in Abhängigkeit der Windgeschwindigkeit, des Arbeitspunktes und/oder der Gondelposition sind beispielhaft zu verstehen, auch andere Abhängigkeiten der Kennfelder sind vorstellbar.

Vorzugsweise ist das Kennfeld in Abhängigkeit von Windgeschwindigkeit und Betriebskennlinie und/oder von Windgeschwindigkeit und Drehzahl der Windenergieanlage tabelliert. In anderen Ausführungsformen können aber wie angesprochen auch andere, beispielsweise die Schnelllaufzahl der Windenergieanlage oder andere Abhängigkeiten Eingang in das Kennfeld finden.

In einer Ausführungsform werden benachbarte Kennfeldzellen geglättet. Beispielsweise kann sich die Quantisierung der Kennfeldzellen des Lernverfahrens von der Quantisierung automatisch erzeugter bzw. voreingestellter Kennfelder unterscheiden. Insbesondere kann eine gröbere Quantisierung für das Lernverfahren verwendet werden, um die Anzahl der zu optimierenden Korrekturwerte des Kennfeldes überschaubar zu halten. Um sicherzugehen, dass sich Unstetigkeiten nicht als sprungartige Windnachführungen äußern, können aneinander angrenzende Kennfeldzellen vorzugsweise aneinander angeglichen werden.

In einer Ausführungsform stellt der Optimierungsschritt eine Änderung, insbesondere eine Verbesserung, des Korrekturwertes bereit.

In einer Ausführungsform ist die Änderung des Korrekturwertes ein konstanter Betrag, beispielsweise 0,1° oder 0,01° im Falle einer Azimutposition. In anderen Ausführungsformen kann die Änderung des Korrekturwertes auch von dem bisherigen Lernverfahren abhängen, beispielsweise kann die Änderung je geringer ausfallen, desto mehr Optimierungsschritte für einen bestimmten Arbeitspunkt bzw. eine bestimmte Windgeschwindigkeit bereits erfolgt sind. In einer weiteren Ausführungsform kann für die Bestimmung des Korrekturwertes der oben beschriebene Leistungsverlust während der Durchführung des Optimierungsschrittes skaliert werden. Anders ausgedrückt kann ein größerer Leistungsverlust für eine größere Änderung der Korrektur sorgen, da angenommen werden kann, dass sich der Korrekturwert noch weit von dem Optimum entfernt befindet.

In einer Ausführungsform wird eine konstante Änderung des Korrekturwertes von einem Zehntelgrad oder einem Hundertstelgrad bereitgestellt. In anderen Ausführungsformen sind auch andere konstante Korrekturwerte vorstellbar.

In einer Ausführungsform wird eine Änderung des Korrekturwertes in Abhängigkeit vom Leistungsabfall bereitgestellt. Vorzugsweise wird die Korrektur auf eine bestimmte Amplitude begrenzt. Damit kann die Wirkung von Messausreißern beschränkt werden.

Beispielsweise kann die Korrektur auf 0,2° beschränkt werden, wobei auch andere Werte als Grenze geeignet sind.

In einem weiteren Aspekt der Erfindung wird eine Windenergieanlage mit einem Steuerungsmodul und einer Windmessvorrichtung bereitgestellt. Die Windmessvorrichtung ist eingerichtet, eine Windgeschwindigkeit und eine Anströmrichtung bereitzustellen. Das Steuerungsmodul ist eingerichtet, einen Korrekturwert der Anströmrichtung in Abhängigkeit der Windgeschwindigkeit bereitzustellen und ein Lernverfahren des Korrekturwertes der Anströmrichtung in Abhängigkeit der Windgeschwindigkeit durchzuführen. Das Lernverfahren umfasst mehrere Optimierungsschritte, wobei eine Ausführung der Optimierungsschritte von den bereits für die bereitgestellte Windgeschwindigkeit durchgeführten Optimierungsschritten abhängt. Die Zeitdauer zwischen zwei für eine Windgeschwindigkeit durchgeführten Optimierungsschritten nimmt mit der Anzahl ausgeführter Optimierungsschritte zu.

Die erfindungsgemäße Windenergieanlage ermöglicht es, die gleichen Vorteile zu erreichen, wie sie durch das erfindungsgemäße Verfahren erzielt werden. Auch die erfindungsgemäße Windenergieanlage kann sämtliche besondere Ausgestaltungen des Verfahrens zeigen und mit sämtlichen vorteilhaften Aspekten kombiniert werden.

Ebenso betrifft die Erfindung einen Windpark mit mehreren erfindungsgemäßen Windenergieanlagen.

Weitere vorteilhafte Ausgestaltungen der Erfindung werden im Folgenden mit Verweis auf die beigefügten Figuren ersichtlich. Diese zeigen:
- Fig. 1: eine schematische Ansicht einer Windenergieanlage.
- Fig. 2: beispielhaft das Durchführen des Lernverfahrens des erfindungsgemäßen Verfahrens.
- Fig. 3: ein schematisches Strukturbild des erfindungsgemäßen Verfahrens.

Nachfolgend können identische Bezugszeichen ähnliche, aber nicht identische Elemente zeigen. Außerdem können gleiche Elemente in unterschiedlichem Maßstab dargestellt sein.

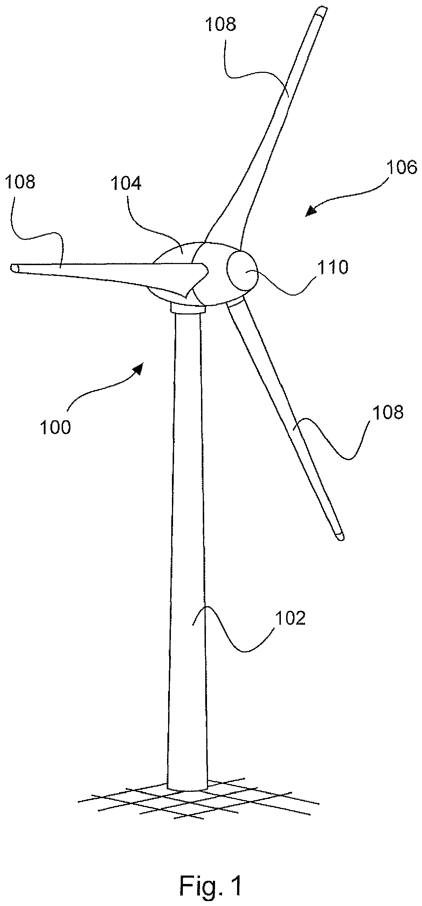

Fig. 1 zeigt eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird in Betrieb durch den Wind in eine Drehbewegung versetzt und treibt dadurch einen Generator in der Gondel 104 an.

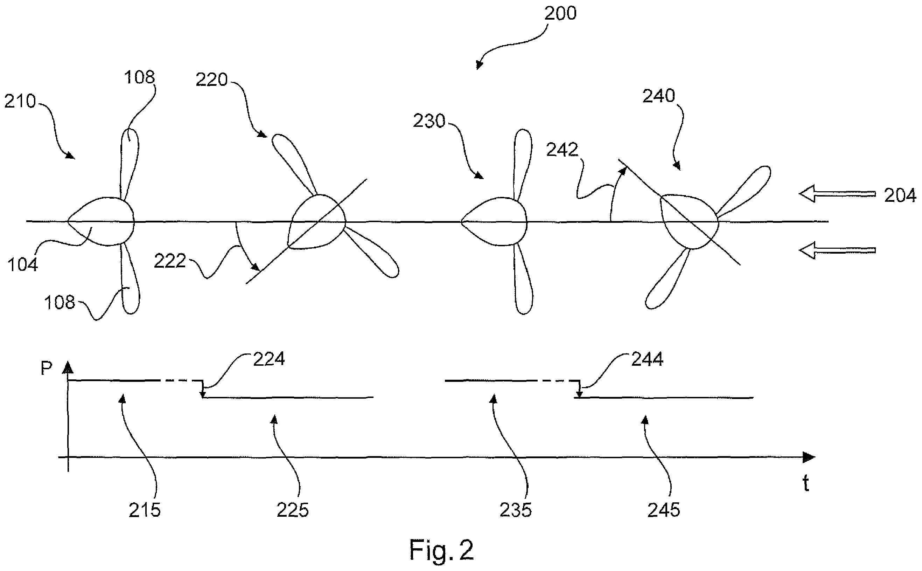

Fig. 2 zeigt beispielhaft das Durchführen eines Optimierungsschrittes 200 eines Lernverfahrens, das in dem erfindungsgemäßen Verfahren zum Steuern einer Windenergieanlage eingesetzt wird. In dem oberen Teil der Fig. 2 sind vier Gondeln 104 einer Windenergieanlage mit jeweils zwei Rotorblättern 108 in einer Draufsicht gezeigt. In der Horizontalen ist die Zeit t aufgetragen, d.h. die vier Gondeln 104 entsprechen der Windenergieanlage zu verschiedenen, aufeinanderfolgenden Zeiten.

Die Windenergieanlage wird in einem Schritt 210 zunächst in Windrichtung 204 ausgerichtet. Während dieser Zeit erzeugt die Windenergieanlage eine Leistung P, die mit 215 bezeichnet ist. In dem unteren Teil der Fig. 2 ist die Zeit t auf der Horizontalen gegen die erzielte Leistung P aufgetragen. Bei Beginn des Optimierungsschrittes wird die Windenergieanlage in Schritt 220 um einen Winkel 222 in Azimutrichtung verdreht. Der Winkel 222 ist in diesem Beispiel nach links aus dem Wind 204 angezeichnet, kann in anderen Ausführungsbeispielen aber auch der anderen Richtung entsprechen. Während dieser Position erzeugt die Windenergieanlage eine Leistung P, die mit 225 angedeutet ist und um einen Wert 224 geringer als die Leistung 215 ist, die erreicht wurde, als die Windenergieanlage im Wind stand.

Nach der Verdrehung nach links in Schritt 220 wird die Windenergieanlage in Schritt 230 wieder in den Wind gedreht. Die erreichte Leistung 235 entspricht der vorher erzielten Leistung 215. Wenn sich die Leistung 235 von der Leistung 215 unterscheidet, ist dies ein Anzeichen für eine Böigkeit des Windes, was zu einem Aussetzen des Lernverfahrens bzw. des Optimierungsschrittes 200 führt.

Anschließend wird in Schritt 240 die Windenergieanlage in dem Beispiel nach rechts um einen Verstellwinkel 242 verdreht. Der Unterschied 244 zwischen einer Leistung 245 während der Azimutposition in Schritt 240 und der Leistung 235 während Schritt 230 wird mit der Leistungsdifferenz 224 verglichen. Ist der Wert 224 von dem Wert 244 verschieden, ist dies ein Anzeichen dafür, dass die von der Windenergieanlage durchgeführte Windrichtungskorrektur nicht optimal ist und durch das Lernverfahren ein verbesserter Regelungswert bzw. ein Korrekturfaktor zu dem Regelungswert erhalten wird. In diesem Ausführungsbeispiel kann das Lernverfahren 200 als Maximum Power Point Tracking (MPPT) des Azimutwinkels verstanden werden. Das MPPT-Verfahren wird in dem in Fig. 2 gezeigten Fall folgern, dass an dem Arbeitspunkt, an dem die Windenergieanlage in den Schritten 210 bis 240 betrieben wird, die Windrichtungskorrektur weiter nach links zu verschieben ist, da die Linksdrehung einen geringeren Leistungseinbruch zur Folge hat als die Rechtsdrehung.

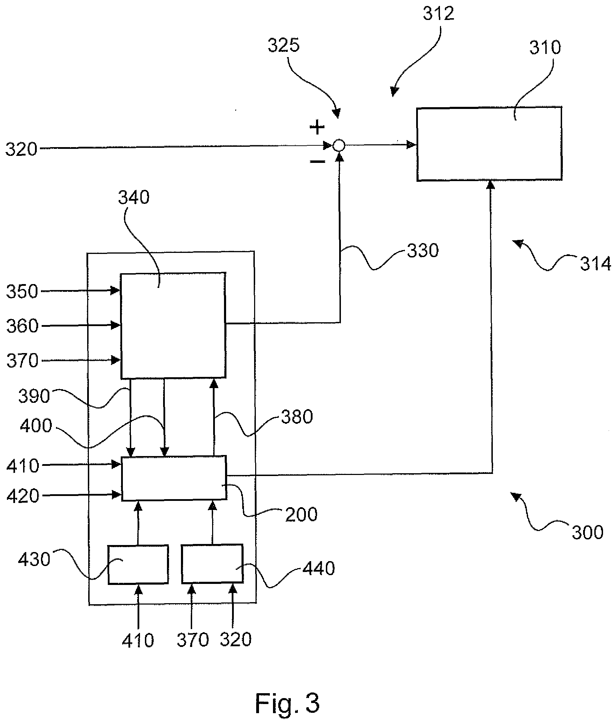

Fig. 3 zeigt ein beispielhaftes Strukturbild eines erfindungsgemäßen Verfahrens 300 zum Steuern einer Windenergieanlage. Ein zentrales Element des Verfahrens 300 ist das Windnachführungssystem 310, das eine Regelung der Windenergieanlage zur Nachführung an den Wind sicherstellt. Diese Einheit ist auch als Yaw-Einheit bekannt.

In einem Regelbetrieb wird das Windrichtungsnachführungssystem 310 über einen Eingang 312 mit einer Windrichtungsmessung 320, die an einem Schritt 325 um einen Windrichtungskorrekturwinkel 330 korrigiert wurde, versorgt. Als Regelungswert der Anströmrichtung eignet sich sowohl der Windrichtungskorrekturwinkel 330 als auch die erzeugte Differenz, wie es in dem Beispiel gezeigt ist, wobei das Windrichtungsnachführungssystem 310 entsprechend angepasst ist. Die Windrichtungsmessung 320 erfolgt vorzugsweise basierend auf einem Anemometer, das auf der Gondel 104 der Windenergieanlage 100 montiert ist.

Der Windrichtungskorrekturwinkel 330 wird aus einem Korrekturkennfeld 340 bestimmt, wobei das Korrekturkennfeld 340 als Eingangsgröße eine Windgeschwindigkeit 350 und optional zusätzlich eine Schnelllaufzahl, Drehzahl oder Leistungskennlinie 360 und eine Gondelposition 370, die der Himmelsrichtung des Windes entspricht, aufweist. Das Korrekturkennfeld 340 weist entsprechend eine oder mehrere Dimensionen auf.

Die Eingangsgrößen 350 und optional 360 und/oder 370 werden verwendet, um mittels des Korrekturkennfeldes 340 den Windrichtungskorrekturwinkel 330 zu erhalten und die Windrichtungsmessung 320 zu korrigieren.

Das in Fig. 2 auszugsweise gezeigte MPPT-Verfahren 200 sorgt über einen Schritt 380 für eine Korrektur des Korrekturkennfeldes 340, wenn das Verfahren einen Optimierungsbedarf sieht.

Dem MPPT-Verfahren 200 wird ein Index 390 sowie ein Korrekturzähler 400 zugeführt. Der Index 390 gibt den Wert des Korrekturkennfeldes 340 an, der sich aus den Eingangsparametern 350 und optional 360 bzw. 370 ergibt. Der Korrekturzähler 400 gibt einen Wert dafür an, wie häufig der Kennfeldwert an dem Index 390 bereits das MPPT-Verfahren 200 durchlaufen hat und ggf. korrigiert wurde. Vorzugsweise ist der zeitliche Abstand zwischen zwei aufeinanderfolgenden Lernschritten des MPPT-Verfahrens 200 abhängig von dem Korrekturzähler 400 und steigt mit steigendem Korrekturzählerwert 400 an. Das MPPT-Verfahren 200 erfordert, wie bereits in Fig. 2 beschrieben wurde, als weitere Eingangsgröße einen Leistungswert 410 und optional einen Blattwinkel 420. Der Blattwinkel 420 wird dann eingesetzt, wenn das MPPT-Verfahren 200 bei einer Verdrehung der Gondel in den Schritten 220 und 240 keinen Leistungsabfall feststellt, das heißt, wenn die Windenergieanlage mit Nennleistung betrieben wird. Derjenige Windrichtungskorrekturwinkel 330 ist dichter am Optimum, bei dem die Windenergieanlage 100 noch mit einem höheren Blattwinkel die Nennleistung erzeugen kann.

Das MPPT-Verfahren 200 wird pausiert, wenn eine Böigkeitserkennung 430 eine Böigkeit des Windes feststellt. Dafür erfasst die Böigkeitserkennung 430 die Leistung 410 und bestimmt beispielsweise einen Unterschied der Momentanleistung von der Einminuten-Mittelwertsleistung der vergangenen Minute. Wenn dieser Unterschied der Leistungen einen bestimmten Schwellwert übersteigt, liegt böiger Wind vor, der das Lernverfahren zu leicht verfälschen würde. Insbesondere wird sich die Windgeschwindigkeit bei Vorhandensein eines böigen Windes schneller ändern als sich die Gondel 104 um eine hinreichende Menge um die Azimutachse drehen kann.

Ferner liegt eine Schräganströmungserkennungseinheit 440 vor, die ebenfalls zu einer Aussetzung des MPPT-Verfahrens 200 führt, wenn die Schrägansteuerungserkennung 440 mittels der eingegebenen Gondelposition 370 und der Windrichtungsmessung 320 detektiert, dass die Windrichtung gerade häufig schwankt, die Windenergieanlage 100 somit ohnehin viele Windnachführungen durchführt bzw. sogar eine Schräganströmung festgestellt wird.

Zur Bildung der Korrekturschritte werden Optimierungsschritte, die auch als Lernschritte bezeichenbar sind, über einen zweiten Eingang 314 an das Windrichtungsnachführungssystem 300 gegeben. Die entsprechenden Stellwinkelverläufe sind beispielsweise in den Schritten 210 bis 240 der Fig. 2 gezeigt.

Vorzugsweise wird bei jedem Optimierungsschritt der Azimutwinkel um einen konstanten Stellwinkel, beispielsweise 5°, verstellt. Die Verstellung erfolgt abwechselnd in jede Richtung bezogen auf die jeweils bislang als ideal angenommene Anlagenausrichtung. In anderen Ausführungsbeispielen sind auch mit der Anzahl des Korrekturzählers 400 oder von anderen Parametern abhängende Stellwinkel, um die die Anlage verstellt wird, vorstellbar.

Die Stärke des Korrekturschritts 380 ist in diesem Ausführungsbeispiel proportional zum detektierten Leistungsunterschied, das heißt der Differenz zwischen Leistung 240 und 224. Alternativ kann auch die absolute Leistungsdifferenz 224 bzw. 244 zur Skalierung des Korrekturschrittes herangezogen werden. Der Hintergedanke dabei ist, dass Leistungsgradienten in Richtung eines Optimums flacher sind, das heißt Leistungsverluste weniger stark sind, je näher sich die Korrektur an dem Optimum befindet. Am Optimum sind die Gradienten für Links- und Rechtsdrehungen gleich stark, das heißt eine dann wiederkehrende Ausführung des MPPT-Verfahrens 200 hat keine Veränderung mehr zur Folge. In anderen Ausführungsbeispielen kann der Korrekturschritt 380 auch fest vorgegeben und konstant sein.

Die Stärke der Windablenkung ist insbesondere, wenn Rotorblätter 108 verwendet werden, die ein Hinterkantensegment aufweisen, von dem Drehmoment abhängig, das dem Wind entzogen wird. Das Drehmoment lässt sich durch die Schnelllaufzahl, das heißt das Verhältnis der Umfangsgeschwindigkeit zur Windgeschwindigkeit, ausdrücken. Alternativ zur Tabellierung des Korrekturkennfeldes 340 basierend auf der Windgeschwindigkeit 350 kann somit auch eine schnelllaufzahlabhängige Tabellierung vorgesehen werden. Da die Windgeschwindigkeit 350 keine Information über das Drehmoment enthält, wird vorzugsweise eine zweite Dimension in das Korrekturkennfeld 340 hinzugefügt. Vorzugsweise wird das Korrekturkennfeld 340 damit zusätzlich in Abhängigkeit der gewählten Leistungskennlinie als Eingang 360 erzeugt. Alternativ zur Tabellierung über Windgeschwindigkeit 350 und Betriebskennlinie ist auch eine Tabellierung des Korrekturkennfeldes 340 über Windgeschwindigkeit 350 und Schnelllaufzahl oder Drehzahl 360 möglich. Die zusätzliche Dimension über die Gondelposition 370 ermöglicht, absolute Windrichtungen für das Korrekturkennfeld 340 zu integrieren und somit richtungsabhängige Windrichtungskorrekturen, die beispielsweise Parkeffekte berücksichtigen, zu ermöglichen.

Die Windgeschwindigkeitsmessung wird durch eine Schräganströmung der Windenergieanlage 100 beeinflusst, da der Wind bei Schräganströmung aus einer Richtung besser durch den Rotor 108 wehen kann als bei einer Schräganströmung aus der Gegenrichtung. Die Schräganströmung, die sich bei den Optimierungsschritten nach links und rechts jeweils kurzzeitig ergeben, verfälscht die Windgeschwindigkeitsmessung während der Durchführung des Optimierungsschrittes asymmetrisch. Um zu vermeiden, dass sich eine Asymmetrie in den Kennfeldern 340 ergibt, bei der eine Drehrichtung bevorzugt werden würde, darf die Windgeschwindigkeitsmessung während des Optimierungsschrittes nicht ausgewertet werden. Die Windgeschwindigkeit muss vor oder nach dem Optimierungsschritt gemessen werden und der zugehörige Index 390 in den Kennfeldern 340 ausgewählt werden.

In den automatisch aufgebauten Kennfeldern 340 kann es zu Unstetigkeiten kommen. Diese Unstetigkeiten sind beispielsweise durch Aufbauten auf der Gondel 104 zu erklären, die sich verfälschend auf die Windrichtungsmessung auswirken. Eigentlich ist es gewollt, diese Unstetigkeiten auch in den Korrekturkennfeldern 340 zu erfassen. Aufgrund grober Quantisierung ist dies jedoch nicht perfekt möglich. Damit diese Unstetigkeiten in den Kennfeldern 340 nicht zu sprungartigen Windnachführungen durch die Windrichtungsnachführung 310 führen, wird vorzugsweise ein Glättungsalgorithmus verwendet, der benachbarte Zellen des Korrekturkennfeldes 340 einander angleicht.

## Patentansprüche

1. Verfahren zum Steuern einer Windenergieanlage (100), umfassend:
Bereitstellen einer Windgeschwindigkeit (350) und einer Anströmrichtung (320), die von einer Windmessvorrichtung der Windenergieanlage (100) bestimmt werden,
Bereitstellen eines Korrekturwertes (330) der Anströmrichtung (320) in Abhängigkeit der Windgeschwindigkeit (350),
Durchführen eines Lernverfahrens des Korrekturwertes (330) der Anströmrichtung (320) in Abhängigkeit der Windgeschwindigkeit, wobei
das Lernverfahren mehrere Optimierungsschritte (200) umfasst und eine Ausführung der Optimierungsschritte von den bereits für die bereitgestellte Windgeschwindigkeit durchgeführten Optimierungsschritten abhängt, **dadurch gekennzeichnet, dass** eine Zeitdauer zwischen zwei für eine Windgeschwindigkeit durchgeführten Optimierungsschritten mit der Anzahl ausgeführter Optimierungsschritte ansteigt.

2. Verfahren nach Anspruch 1, wobei der Korrekturwert (330) der Anströmrichtung (320) in Abhängigkeit eines Arbeitspunktes der Windenergieanlage (100) bereitgestellt wird.

3. Verfahren nach einem der vorstehenden Ansprüche, wobei der Korrekturwert (330) die gemessene Anströmrichtung (320) zur Regelung einer Azimutposition der Windenergieanlage korrigiert (325).

4. Verfahren nach einem der vorstehenden Ansprüche, wobei jeder Optimierungsschritt ein Variieren eines Azimutwinkels der Windenergieanlage (100) in zunächst die eine und dann die andere Richtung, insbesondere symmetrisch in zunächst die eine und dann die andere Richtung, aufweist.

5. Verfahren nach Anspruch 4, wobei jeder Optimierungsschritt weiter aufweist:
- Bestimmen des jeweiligen Leistungsabfalls (224, 244) der Windenergieanlage (100) nach dem Variieren des Azimutwinkels in die eine Richtung und die andere Richtung,
- Auswerten beider Leistungsabfälle (224, 244) und Bestimmen der Richtung des Variierens mit geringerem Leistungsabfall und optional
- Bereitstellen einer Änderung des Korrekturwertes (380) in der Richtung des geringeren Leistungsabfalls.

6. Verfahren nach Anspruch 5, wobei jeder Optimierungsschritt dann, wenn die Windenergieanlage Nennleistung erzeugt und kein Leistungsabfall (224, 244) bei dem Variieren des Azimutwinkels in die eine Richtung und die andere Richtung auftritt, weiter aufweist:
- Erhöhen eines Blattwinkels der Rotorblätter,
- Feststellen eines maximalen Blattwinkels, für den die Windenergieanlage Nennleistung erzeugen kann, und optional
- Bereitstellen einer Änderung des Korrekturwertes (380) in der Richtung, für die die Windenergieanlage mit höherem Blattwinkel die Nennleistung erzeugen kann.

7. Verfahren nach einem der vorstehenden Ansprüche, wobei ein Optimierungsschritt des Lernverfahrens nur dann durchgeführt wird, wenn ein Turbulenzkriterium einen Schwellwert unterschreitet, wobei das Turbulenzkriterium einen Unterschied zwischen einem Momentanwert und einem Einminutenmittelwert der Leistung umfasst.

8. Verfahren nach einem der vorstehenden Ansprüche, wobei ein Optimierungsschritt des Lernverfahrens nur dann durchgeführt wird, wenn eine Schwankung der Windrichtung einen Schwellwert unterschreitet.

9. Verfahren nach einem der vorstehenden Ansprüche, wobei die Windgeschwindigkeit (350) vor dem Beginn oder nach dem Abschluss eines Optimierungsschrittes bestimmt wird.

10. Verfahren nach einem der vorstehenden Ansprüche, das weiter umfasst:
Bereitstellen einer Gondelposition (370), wobei der Korrekturwert (330) in Abhängigkeit der Gondelposition (370) bereitgestellt und das Lernverfahren (200) in Abhängigkeit der Gondelposition (370) durchgeführt wird.

11. Verfahren nach einem der vorstehenden Ansprüche, wobei der Korrekturwert (330) basierend auf einem Kennfeld (340) bereitgestellt wird, wobei das Kennfeld (340) in Abhängigkeit von Windgeschwindigkeit (350) und Betriebskennlinie und/oder von Windgeschwindigkeit (350) und Drehzahl der Windenergieanlage tabelliert ist.

12. Verfahren nach Anspruch 11, wobei benachbarte Kennfeldzellen geglättet werden.

13. Verfahren nach einem der vorstehenden Ansprüche, wobei der Optimierungsschritt eine Änderung (380), insbesondere eine Verbesserung, des Korrekturwertes (330) bereitstellt, wobei der Optimierungsschritt eine konstante Änderung, insbesondere 1/10° bzw. 1/100°, oder eine in Abhängigkeit eines Leistungsabfalls skalierte Änderung bereitstellt.

14. Windenergieanlage (100) mit einem Steuerungsmodul und einer Windmessvorrichtung, wobei die Windmessvorrichtung eingerichtet ist, eine Windgeschwindigkeit (350) und eine Anströmrichtung (320) bereitzustellen, wobei das Steuerungsmodul eingerichtet ist,
einen Korrekturwert (330) der Anströmrichtung (320) in Abhängigkeit der Windgeschwindigkeit (350) bereitzustellen und ein Lernverfahren (200) des Korrekturwertes (330) der Anströmrichtung (320) in Abhängigkeit der Windgeschwindigkeit (350) durchzuführen, wobei
das Lernverfahren (200) mehrere Optimierungsschritte umfasst und eine Ausführung der Optimierungsschritte von den bereits für die bereitgestellte Windgeschwindigkeit durchgeführten Optimierungsschritten abhängt, **dadurch gekennzeichnet, dass** eine Zeitdauer zwischen zwei für eine Windgeschwindigkeit durchgeführten Optimierungsschritten mit der Anzahl ausgeführter Optimierungsschritte ansteigt.

15. Windpark mit mehreren Windenergieanlagen (100) nach Anspruch 14.

## Claims

1. A method for controlling a wind power installation (100), comprising:
providing a wind speed (350) and a direction of incident flow (320), which are determined by a wind measuring device of the wind power installation (100),
providing a correction value (330) of the direction of incident flow (320) in dependence on the wind speed (350),
carrying out a process of learning the correction value (330) of the direction of incident flow (320) in dependence on the wind speed, wherein
the learning process comprises several optimizing steps (200) and an execution of the optimizing steps depending on the optimizing steps that have already been carried out for the wind speed provided,
**characterized in that** a time period between two optimizing steps carried out for a wind speed increases with the number of optimizing steps executed.

2. The method according to claim 1, wherein the correction value (330) of the direction of incident flow (320) is provided in dependence on a working point of the wind power installation (100).

3. The method according to one of the previous claims, wherein the correction value (330) corrects the direction of incident flow (320) for controlling an azimuthal position of the wind power installation (325).

4. The method according to one of the previous claims, wherein each one of said optimizing steps comprises varying, especially symmetrically, an azimuth angle of the wind power installation (100) in a first one direction and then the other direction.

5. The method according to claim 4, wherein each one of said optimizing steps also comprises:
- determining a respective drop in power (224, 244) of the wind power installation (100) after the varying of the azimuth angle in said first one direction and the other direction,
- evaluating both drops in power (224, 244) and determining the direction of the variation with a smaller drop in power and optionally
- providing an amendment of the correction value (380) in the direction of a smaller drop in power.

6. The method according to claim 5, wherein, whenever the wind power installation generates rated power and no drop in power (224, 244) occurs during the variation of the azimuth angle in the one direction and the other direction, each one of said optimizing steps also comprises:
- increasing a blade angle of the rotor blades,
- establishing a maximum blade angle for which the wind power installation can generate rated power, and optionally
- providing an amendment of the correction value (380) in the direction for which the wind power installation can generate the rated power with a higher blade angle.

7. The method according to one of the previous claims, wherein an optimizing step of the learning process is only carried out whenever a turbulence criterion goes below a threshold value, wherein the turbulence criterion comprises a difference between a momentary value and a one-minute mean value of the power.

8. The method according to one of the previous claims, wherein one optimizing step of the learning process is only carried out whenever a variation of the wind direction goes below a threshold value.

9. The method according to one of the previous claims, wherein the wind speed (350) is determined before the beginning or after the completion of an optimizing step.

10. The method according to one of the previous claims, which further comprises:
providing a nacelle position (370), the correction value (330) being provided in dependence on the nacelle position (370) and the learning process (200) being carried out in dependence on the nacelle position (370).

11. The method according to one of the previous claims, wherein the correction value (330) is provided on the basis of a characteristic diagram (340), wherein the characteristic diagram (340) is tabulated in dependence on the wind speed (350) and operating characteristic curve and/or the wind speed (350) and rotational speed of the wind power installation.

12. The method according to claim 11, wherein neighboring characteristic diagram cells are smoothed.

13. The method according to one of the previous claims, wherein the optimizing step provides an amendment (380), especially an improvement, in the correction value (330) wherein the optimizing step provides a constant amendment, especially 1/10° or 1/100°, or an amendment scaled in dependence on a drop in power.

14. A wind power installation (100) with a control module and a wind measuring device, wherein the wind measuring device is configured to provide a wind speed (350) and a direction of incident flow (320),
wherein the control module is configured
to provide a correction value (330) of the direction of incident flow (320) in dependence on the wind speed (350) and to carry out a learning process (200) of the correction value (330) of the direction of incident flow (320) in dependence on the wind speed (350), wherein the learning process (200) comprises a several optimizing steps and an execution of the optimizing steps depends on the optimizing steps that have already been carried out for the wind speed provided,
**characterized in that** a time period between two optimizing steps carried out for a wind speed increases with the number of optimizing steps executed.

15. A wind farm with a number of wind power installations (100) according to claim 14.

## Revendications

1. Procédé de commande d'une installation d'énergie éolienne (100), comprenant : fournir une vitesse de vent (350) et une direction d'afflux (320) déterminées par un dispositif de mesure de vent de l'installation d'énergie éolienne (100),
fournir une valeur de correction (330) de la direction d'afflux (320) en fonction de la vitesse du vent (350),
l'exécution d'un procédé d'apprentissage de la valeur de correction (330) de la direction d'afflux (320) en fonction de la vitesse du vent, dans lequel
le procédé d'apprentissage comprend plusieurs étapes d'optimisation (200) et une exécution des étapes d'optimisation dépend des étapes d'optimisation déjà exécutées pour la vitesse du vent fournie, **caractérisé en ce qu'**une durée entre deux étapes d'optimisation exécutées pour une vitesse du vent augmente avec le nombre d'étapes d'optimisation exécutées.

2. Procédé selon la revendication 1 dans lequel la valeur de correction (330) de la direction d'afflux (320) est fournie en fonction d'un point de fonctionnement de l'installation d'énergie éolienne (100).

3. Procédé selon l'une des revendications précédentes dans lequel la valeur de correction (330) corrige (325) la direction d'afflux (320) mesurée pour réguler une position azimutale de l'installation d'énergie éolienne.

4. Procédé selon l'une des revendications précédentes dans lequel chaque étape d'optimisation comprend une variation d'un angle d'azimut de l'installation d'énergie éolienne (100) d'abord dans une direction puis dans l'autre, en particulier symétriquement dans une direction puis dans l'autre.

5. Procédé selon la revendication 4 dans lequel chaque étape d'optimisation comprend en outre :
- déterminer la chute de puissance (224, 244) respective de l'installation d'énergie éolienne (100) après avoir fait varier l'angle d'azimut dans l'une direction et dans l'autre direction,
- évaluer les deux chutes de puissance (224, 244) et déterminer la direction de la variation avec une chute de puissance plus faible et, optionnellement
- fournir une modification de la valeur de correction (380) dans le sens de la baisse de puissance plus faible.

6. Procédé selon la revendication 5 dans lequel, lorsque l'éolienne produit une puissance nominale et qu'aucune chute de puissance (224, 244) ne se produit lorsque l'angle d'azimut varie dans l'une direction et dans l'autre direction, chaque étape d'optimisation comprend en outre :
- Augmentation d'un angle de pale des pales de rotor,
- Détermination d'un angle de pale maximal pour lequel l'installation d'énergie éolienne peut produire la puissance nominale, et optionnellement
- fournir une modification de la valeur de correction (380) dans la direction pour laquelle l'installation d'énergie éolienne peut, avec un angle de pale plus élevé, produire la puissance nominale.

7. Procédé selon l'une des revendications précédentes dans lequel une étape d'optimisation du procédé d'apprentissage n'est effectuée que lorsqu'un critère de turbulence est inférieur à une valeur seuil, le critère de turbulence comprenant une différence entre une valeur instantanée et une valeur moyenne d'une minute de la puissance.

8. Procédé selon l'une des revendications précédentes dans lequel une étape d'optimisation du procédé d'apprentissage n'est effectuée que lorsqu'une variation de la direction du vent est inférieure à une valeur seuil.

9. Procédé selon l'une des revendications précédentes dans lequel la vitesse du vent (350) est déterminée avant le début ou après la fin d'une étape d'optimisation.

10. Procédé selon l'une des revendications précédentes qui comprend en outre :
fournir une position de nacelle (370), la valeur de correction (330) étant fournie en fonction de la position de nacelle (370) et le procédé d'apprentissage (200) étant exécuté en fonction de la position de nacelle (370).

11. Procédé selon l'une des revendications précédentes dans lequel la valeur de correction (330) est fournie sur la base d'un diagramme caractéristique (340), le diagramme caractéristique (340) étant tabulé en fonction de la vitesse du vent (350) et de la caractéristique de fonctionnement et/ou de la vitesse du vent (350) et de la vitesse de rotation de l'installation d'énergie éolienne.

12. Procédé selon la revendication 11 dans lequel des cellules caractéristiques voisines sont lissées.

13. Procédé selon l'une des revendications précédentes dans lequel l'étape d'optimisation fournit une modification (380), en particulier une amélioration, de la valeur de correction (330), l'étape d'optimisation fournissant une modification constante, en particulier 1/10° ou 1/100°, ou une modification mise à l'échelle en fonction d'une chute de puissance.

14. Installation d'énergie éolienne (100) avec un module de commande et un dispositif de mesure du vent, le dispositif de mesure du vent étant conçu pour fournir une vitesse du vent (350) et une direction d'afflux (320), le module de commande étant conçu pour fournir une valeur de correction (330) de la direction d'afflux (320) en fonction de la vitesse du vent (350) et pour exécuter un procédé d'apprentissage (200) de la valeur de correction (330) de la direction d'afflux (320) en fonction de la vitesse du vent (350), le procédé d'apprentissage (200) comprenant plusieurs étapes d'optimisation et une exécution des étapes d'optimisation dépendant des étapes d'optimisation déjà exécutées pour la vitesse du vent mise à disposition, **caractérisé en ce qu'**une durée entre deux étapes d'optimisation exécutées pour une vitesse du vent augmente avec le nombre d'étapes d'optimisation exécutées.

15. Parc éolien comprenant plusieurs installation d'énergie éolienne (100) selon la revendication 14.
